# EUROPEAN PATENT APPLICATION

(11) **EP 4 404 535 A1**
(43) Date of publication of application: **24.07.2024**
(21) Application number: 22933066.7
(22) Date of filing: 25.10.2022
(51) Int. Cl.: H04L 65/10

(54) **SERVICE XDR ACQUISITION METHOD, AND DEVICE AND STORAGE MEDIUM**

(30) Priority: 22.03.2022 CN 202210287606
(71) Applicant: ZTE Corporation, Shenzhen, Guangdong 518057 (CN)
(72) Inventor: AI, Hongfang, Shenzhen, Guangdong 518057 (CN); ZHANG, Haitao, Shenzhen, Guangdong 518057 (CN); YAN, Xiao, Shenzhen, Guangdong 518057 (CN)
(74) Representative: Osterhoff, Utz
(86) International application number: PCT/CN2022/127473
(87) International publication number: WO 2023/179015

(57) **Abstract**

Disclosed are a method and a device for obtaining business x detail record (XDR), and a storage medium. The method for obtaining business XDR is applied to a first device and includes: (401), receiving business XDR sent by a second device, where the business XDR is generated based on business data collected from a user plane; (402), searching target signaling XDR in signaling XDR sent by a third device according to the business XDR and a preset association between business and signaling, where the signaling XDR is generated based on information related to business in a signaling collected from a control plane; and (403), updating the business XDR according to the target signaling XDR, so that even when the control plane is separated from the user plane, a complete service XDR can be obtained.

## Description

### CROSS-REFERENCE TO RELATED APPLICATIONS

The present application claims priority to Chinese patent application No. 202210287606.2, and filed on March 22, 2022, the entire contents of which are incorporated herein by reference.

### TECHNICAL FIELD

Embodiments of the present application relate to the technical field of communication, and in particular to a method and a device for obtaining business x detail record (XDR), and a storage medium.

### BACKGROUND

In order to better monitor and manage network elements in the network, the x (application) detail record (XDR) is usually generated based on the data in the network element. The XDR can be divided into two types, one is a signaling XDR used to record the signaling transmission process between network elements and the signaling content, and the other one is the busyness XDR used to record information related to the users. Taking the session border controller (SBC) as an example, the session initiation protocol (SIP) signaling on the control plane, and the real-time transport protocol (RTP) and the real-time transport control protocol (RTCP) data packets on the media plane are collected synchronously, and is shunted to the same collection and analysis device. Then the collection and analysis device extracts the relevant fields from the SIP signaling and the RTP/RTCP data packets and fills in the relevant fields to generate the signaling XDR and the business XDR.

However, the above process can only be realized when the control plane is not separated from the user plane and the signaling and busyness data is processed by the same collection and analysis device. For the network element that the control plane is separated from the user plane, the signaling and business data is no longer processed by the same collection and analysis device. Therefore, fields in the business XDR that need to be filled in based on the control plane information will be missing, thereby failing to obtain the complete and valid business XDR.

### SUMMARY

The main purpose of embodiments of the present application is to propose a method, a device for obtaining business x detail record (XDR), and a storage medium, aiming to obtain the complete and accurate business XDR even when the control plane is separated from the user plane.

In order to achieve the above objectives, the present application provides a method for obtaining business XDR, which is applied to a first device and includes: receiving business XDR sent by a second device, where the business XDR is generated based on business data collected from a user plane; searching target signaling XDR in signaling XDR sent by a third device according to the business XDR and a preset association between business and signaling, where the signaling XDR is generated based on information related to business in a signaling collected from a control plane; and updating the business XDR according to the target signaling XDR.

In order to achieve the above objectives, the present application further provides a method for obtaining business XDR, which is applied to a second device and includes: collecting business data from a user plane; filling in a non-control related field to generate the business XDR according to the business data; and sending the business XDR to a first device.

In order to achieve the above objectives, the present application further provides a method for obtaining business XDR, which is applied to a third device and includes: collecting a signaling from a control plane; generating signaling XDR according to information related to business in the signaling; and sending the signaling XDR to a first device.

In order to achieve the above objectives, the present application further provides a device including: a receiving module configured to receive business XDR sent by a second device, where the business XDR is generated based on business data collected from a user plane; a search module configured to search target signaling XDR in signaling XDR sent by a third device according to the business XDR and a preset association between business and signaling, where the signaling XDR is generated based on information related to business in a signaling collected from a control plane; and an updating module configured to update the business XDR according to the target signaling XDR.

In order to achieve the above objectives, the present application further provides a device including: a first collection module configured to collect business data from a user plane; a first generation module configured to fill in a non-control related field according to the business data to generate business XDR; and a first sending module configured to send the business XDR to a first device.

In order to achieve the above objectives, the present application further provides a device including: a second collection module configured to collect signaling from a control plane; a second generation module configured to generate signaling XDR according to information related to business in the signaling; and a second sending module configured to send the signaling XDR to a first device.

In order to achieve the above objectives, the present application further provides an electronic device including: at least one processor; and a memory communicating with the at least one processor. The memory stores an instruction executable by the at least one processor, and when the instruction is executed by the at least one processor, the at least one processor implements the method for obtaining business XDR as mentioned above.

In order to achieve the above objectives, the present application further provides a computer-readable storage medium storing a computer program. When the computer program is executed by a processor, the method for obtaining business XDR as mentioned above is implemented.

In the method for obtaining the business XDR proposed by the present application, not only the signaling XDR that completely records the signaling interaction process is generated based on the signaling, but also another type of signaling XDR is generated based on the business-related information in the signaling collected from the control plane. This type of signaling XDR is generated based on the business-related information in the signaling collected from the control plane. Therefore, the business-related information in the signaling is recorded. In this way, after receiving the business XDR sent by the second device and the signaling XDR sent by the third device, the first device can search the target signaling XDR in the signaling XDR sent by the third device based on the business XDR and the preset association between the business XDR and the signaling, and then can update the business XDR according to the target signaling XDR, so that the fields which the business XDR needs to fill in based on the control plane information can be filled in by the target signaling XDR. In this way, even when the control plane is separated from the user plane, a complete service XDR can still be obtained.

### BRIEF DESCRIPTION OF THE DRAWINGS

One or more embodiments are exemplified by the pictures in the corresponding drawings, and these illustrative descriptions do not constitute a limitation to the embodiments.
FIG. 1 is a schematic diagram of the SBC networking architecture when the control plane is not separated from the user plane in the related art according to the present application.
FIG. 2 is a schematic diagram showing generating the business XDR and the signaling XDR when the control plane is not separated from the user plane in the related art according to the present application.
FIG. 3 is a schematic diagram of the SBC networking architecture when the control plane is separated from the user plane in the related art according to the present application.
FIG. 4 is a flowchart of a method for obtaining business XDR applied to a first device according to an embodiment of the present application.
FIG. 5 is a schematic diagram of data collection when the control plane is not separated from the user plane according to an embodiment of the present application.
FIG. 6 is a flowchart of the method for obtaining business XDR applied to a second device according to an embodiment of the present application.
FIG. 7 is a flowchart of the method for obtaining business XDR applied to a third device according to an embodiment of the present application.
FIG. 8 is a schematic diagram of signaling interaction in the session process according to an embodiment of the present application.
FIG. 9 is a schematic structural diagram of a device according to an embodiment of the present application.
FIG. 10 is a schematic structural diagram of the device according to another embodiment of the present application.
FIG. 11 is a schematic structural diagram of a device according to yet another embodiment of the present application.
FIG. 12 is a schematic structural diagram of an electronic device according to an embodiment of the present application.

### DETAILED DESCRIPTION OF THE EMBODIMENTS

It can be seen from the background that the current method of generating the service XDR and the signaling XDR can only be realized when the control plane of the network element is not separated from the user plane of the network element, thus there is an urgent need for a method that can obtain the complete business XDR even when the control plane is separated from the user plane.

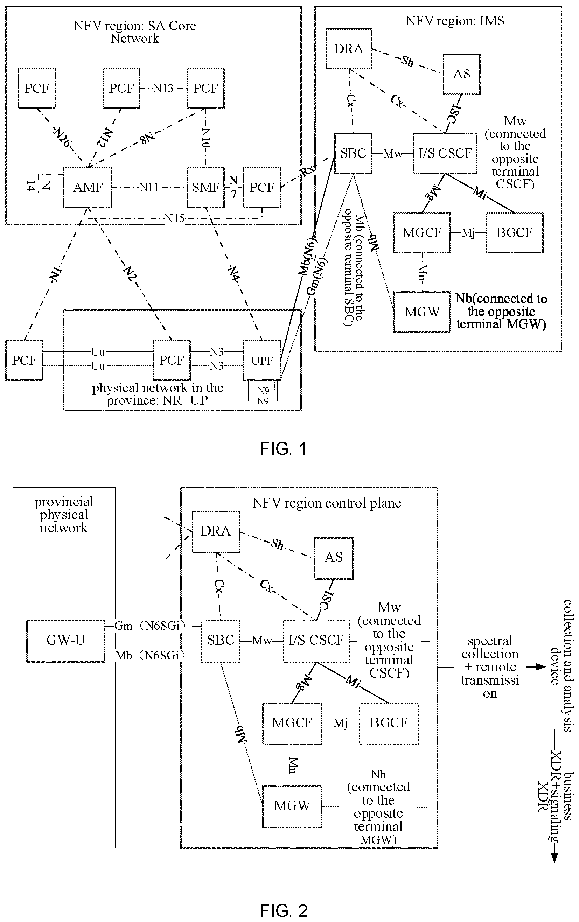

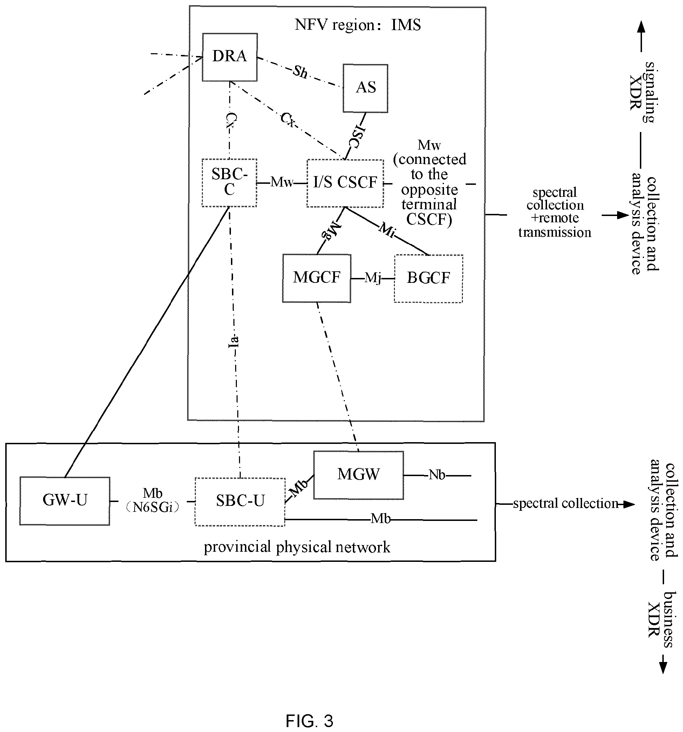

It can be found that the above problems are caused by the following reason: taking the SBC network element of the IP multimedia subsystem (IMS) network as a voice over long-term evolution (VoLTE)/ voice over new radio (VoNR) for user access as an example, the SBC network element includes the functions of processing the control plane SIP signaling flow and the media plane RTP/RTCP data flow, and can process the control plane SIP signaling flow and the media plane RTP/RTCP data flow. When the control plane is not separated from the user plane, as shown in FIG. 1, both the SIP signaling on the control plane and the RTP/RTCP data packets on the media plane are based on the Gm interface which is used to communicate the user plane function (UPF) and the SBC, to access the SBC from the UPF. In this case, the SIP signaling on the control plane and the RTP/RTCP data packets on the media plane are collected on the same optical fiber, and for the same call, the user equipment (UE) side IP address of the two data is the same as the SBC side IP address of the two data. Therefore, in the scenario of generating the business XDR and the signaling XDR, as shown in FIG. 2, on the SBC side, the SIP signaling on the control plane and the RTP/RTCP data packets on the media plane are collected synchronously and shunted to the same collection and analysis device. Thus, when the collection and analysis device processes the business XDR, the fields in the information filling business XDR that can be filled in based on the control plane information will be directly extracted from the SIP signaling on the control plane. When the control plane is separated from the user plane, as shown in FIG. 3, the original SBC network element is divided into two physical entities, namely the session border controller-control (SBC-C) of the SIP signaling on the processing and controlling plane and the session border controller-user (SBC-U) of the RTP/RTCP data on the processing media plane. In this way, the SIP signaling flow on the control plane can access the SBC-C route from the UPF route based on the Gm interface. SBC-C is a virtual network element deployed in the regional network functions virtualization (NFV) resource pool. RTP/RTCP data on the media plane will access the SBC-U from the UPF route. SBC-U is deployed in the province. In this case, the control plane data and the media plane data are collected in the region and the province respectively. For the same call, the UE side IP addresses of the two data are the same, but the SBC-C/SBC-U side IP addresses of the two data are different. The RTP/RTCP data corresponding to the SIP signaling in one SBC-C may be distributed on multiple SBC-Us, and the SIP signaling corresponding to the RTP/RTCP data in one SBC-U may also be distributed on multiple SBC-Cs. That is, there is a mesh network between the SBC-C and the SBC-U, and it is impossible to simply use the IP address relationship of SBC-C/SBC-U to ensure that the two types of data in the same call are shunted to the same collection and analysis device. Therefore, the VoLTE/VoNR business not only outputs the SIP XDR for the SIP signaling, but also outputs the RTP/RTCP slice XDR on the media plane, namely the business XDR, for evaluating the voice quality. Since some fields in the business XDR need to be extracted from information on the control plane, or may be generated based on the calculation of the control plane parameters, so that the business XDR will miss some fields, or the fields are incompletely accurate. The fields in the RTP/RTCP slice XDR that need to be filled in based on control plane information are shown in the following table 1.

**Table 1**

| Field name | Field implication |
|---|---|
| User Type | Identification source terminal UE being as the calling party or the called party |
| Source /Dest HO mark | Switching the logo |
| Service Type | Identifying the slice XDR media type: 1. Audio, 2. Video |
| Codec Type | Audio and video encoding methods |
| Codec Rate | Average encoding rate of the slice |
| Frame Rate | Average frame rate of the video |

In order to solve the above problem, embodiments of the present application provide a method for obtaining the business XDR, which is applied to a first device and includes: receiving business XDR sent by a second device, where the business XDR is generated based on business data collected from a user plane; searching target signaling XDR in signaling XDR sent by a third device according to the business XDR and a preset association between business and signaling, where the signaling XDR is generated based on information related to business in a signaling collected from a control plane; and updating the business XDR according to the target signaling XDR.

In the method for obtaining the business XDR proposed by the present application, not only the signaling XDR that completely records the signaling interaction process is generated based on the signaling, but also another type of signaling XDR is generated based on the business-related information in the signaling collected from the control plane. This type of signaling XDR is generated based on the business-related information in the signaling collected from the control plane. Therefore, the business-related information in the signaling is recorded. In this way, after receiving the business XDR sent by the second device and the signaling XDR sent by the third device, the first device can search the target signaling XDR in the signaling XDR sent by the third device based on the business XDR and the preset association between the business XDR and the signaling, and then can update the business XDR according to the target signaling XDR, so that the fields which the business XDR needs to fill in based on the control plane information can be filled in by the target signaling XDR. In this way, even when the control plane is separated from the user plane, a complete service XDR can still be obtained.

In order to make the purpose, technical solutions and advantages of the embodiments of the present application clearer, each embodiment of the present application will be described in detail below with reference to the accompanying drawings. However, those skilled in the art can understand that in each embodiment of the present application, many technical details are provided to enable readers to better understand the present application. However, even without these technical details, various changes and modifications based on the following embodiments, the technical solution in the present application can also be implemented. The division of the following embodiments is for the convenience of description and should not constitute any limitation on the specific implementation of the present application. The various embodiments can be combined with each other and referenced with each other on the premise that there is no contradiction.

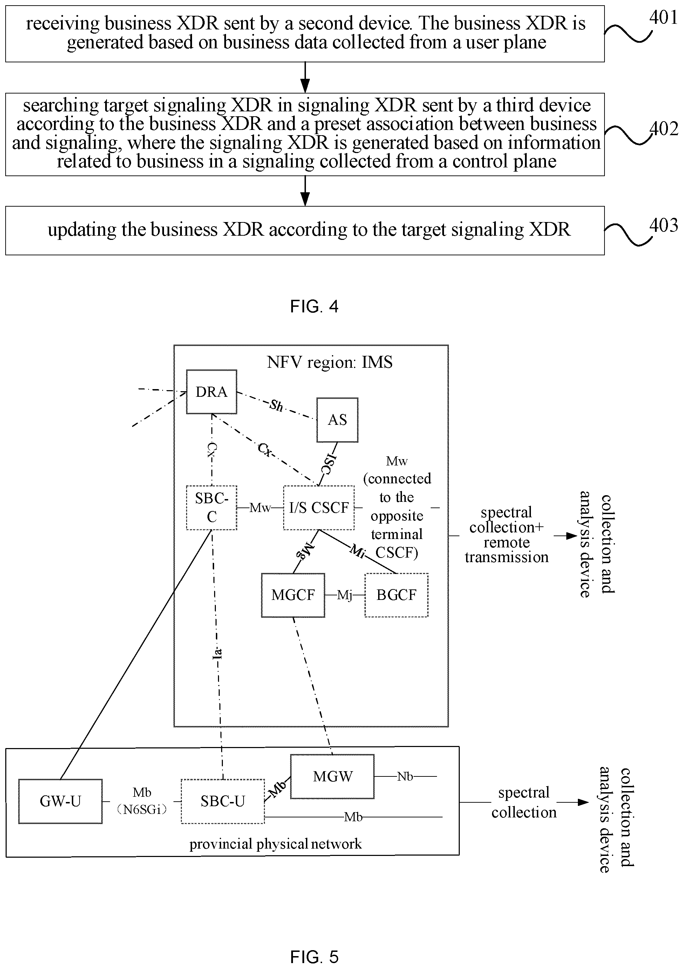

An aspect of the embodiments of the present application provides a method for obtaining business XDR, which is applied to the first device. The process is as shown in FIG. 4 and may include at least the following steps.

Step 401, receiving business XDR sent by a second device. The business XDR is generated based on business data collected from a user plane.

When the user plane of a network element is separated from the control plane of a network element, since the user plane data and the control plane data can no longer be collected by the same device, as shown in FIG. 5, two devices need to be used to collect the business data on the user plane and the signaling on the control plane respectively.

In this embodiment, the second device is configured to collect business data from the user plane after the user plane is separated from the network element, and generate business XDR based on the collected business data. The network element can be any network element in which the user plane and the control plane are separated. Such as the UPF, the SBC, and the like.

Step 402, searching target signaling XDR in signaling XDR sent by a third device according to the business XDR and a preset association between business and signaling, where the signaling XDR is generated based on information related to business in a signaling collected from a control plane.

In this embodiment, the preset association between business and signaling is related to the type of business and the type of signaling. Taking the VoLTE business as an example, the signaling transmitted on the control plane is the SIP signaling, and the business data transmitted on the user plane is mainly the RTP/RTCP data packets, then the preset association between business and signaling can be that the business and signaling originate from the same session, and the like.

It should be noted that the signaling XDR in this embodiment is not generated based on the signaling, but is generated based on part of the information in the signaling, namely the business-related information, for the reason that the signaling contains a variety of information, such as the signaling sending and receiving time, and the like. But not all information needs to be included in the signaling XDR. The point lies in the information that is easy for the business XDR to acquire, namely the information related to the business. Therefore, in the existing signaling XDR generation mode, a type of signaling XDR generated based on the business-related information in the signaling can be added, thereby reducing the data amount and the implementation difficulty, which is easy for transmission. XDR is usually implemented based on a defined interface. Therefore, adding a new type of signaling XDR is actually equivalent to introducing an additional interface. Although a new interface is added, the capacity of the SDP XDR is extremely small and the number is small, adding this interface will have almost no impact on the performance of existing device. In addition, the receiving objects of the business XDR will not be affected by the changes to the added interface.

It can be understood that, for some signaling, multiple signaling XDRs may be generated in the process of providing a business service. For example, in the process of implementing VoLTE business, the signaling XDR can be defined as the SDP XDR obtained additionally based on acquiring the existing SIP XDR, so that multiple SDP XDRs may be generated due to multiple media negotiations in one session. Furthermore, one business XDR may correspond to more than one SDP XDR. In this case, maintenance needs to be performed on the signaling XDR, so that when the first device receives the business XDR, the first device can obtain accurate and sufficient signaling XDR to update it. In addition, the business XDR and the signaling XDR are not necessarily generated synchronously or sent to the first device. Therefore, the maintenance on the signaling XDR also needs to be considered. When receiving the business XDR, the first device can obtain accurate and sufficient signaling XDR to update it.

Based on this, in some embodiments, before the searching the target signaling XDR in the signaling XDR sent by the third device according to the business XDR and the preset association between the business and the signaling, the method further includes: receiving the signaling XDR sent by the third device; and caching a received signaling XDR in a local cache. Correspondingly, the searching the target signaling XDR in the signaling XDR sent by the third device according to the business XDR and the preset association between the business and the signaling can be implemented by following steps: searching the target signaling XDR in the local cache according to the business XDR and the preset association between the business and the signaling.

In order to save space and avoid the interference of historical information on the latest information, each time the latest signaling XDR is received, the business information determined based on the historically received signaling XDR can be modified, and the latest received signaling XDR can be stored, and the like, which will not be repeated here.

Step 403, updating the business XDR according to the target signaling XDR.

It can be understood that the business XDR sent by the third device may have missing fields due to the lack of control plane information. Therefore, the missing fields need to be filled in based on the signaling XDR sent by the second device. The relevant fields that cannot be clearly determined are predicted through the collected information, and are filled in based on the predicted information. Therefore, it is necessary to check whether the fields are correct and amended through the signaling XDR.

Based on this, the updating the business XDR according to the target signaling XDR can be implemented in the following steps: determining a missing field in the business XDR; searching information related to the missing field from the target signaling XDR, and generating a fill field based on found information; and filling the fill field into the business XDR. Before determining the missing fields in the business XDR, the business XDR can be checked first to determine whether there is a missing field. When a missing field is detected, the fields are backfilled in the business XDR according to the target signaling XDR, thereby updating to the business XDR.

In some other embodiments, the updating the business XDR according to the target signaling XDR can also be implemented in the following steps: modifying a corresponding association field in the business XDR according to the association field in the signaling XDR when it is detected that an association field of the target signaling XDR is inconsistent with an association field of the business XDR, where the association field is a field describing a same object in the signaling XDR and the business XDR.

It should be noted that the above embodiments are described from the aspect of missing fields and the aspect of incorrect fields respectively. In other embodiments, whether the fields are missing can be detected first, and then whether the fields are incorrect can be detected, after that, these two methods can be combined for implementation, which will not be repeated.

It can also be understood that, as analyzed above, the business XDR may correspond to more than one signaling XDR, and when the signaling XDR fails, the resources occupied by the failed signaling XDR can be recovered. Based on this, when it is detected that business corresponding to the business XDR ends, the updating the business XDR according to the target signaling XDR can be implemented in the following steps: updating the business XDR according to the target signaling XDR and adding information indicating that the business ends to an updated business XDR, and after the updating the business XDR according to the target signaling XDR, releasing the signaling XDR resource configured to maintain the business XDR. When the SIP session ends, the first device tags the last RTP/RTCP business XDR of the updated SIP session with a call end tag, and releases the resources occupied for storing the signaling XDR.

When the information in the signaling XDR received by the first device that is beneficial for filling the business XDR is in the empty set, some mathematical processing methods or algorithms can be used to predict part of the data to update the business XDR. For example, when processing the VoLTE/VoNR business XDR, if it is impossible to determine some jitter and coding rate-related fields (such as the RTCP Jitter, Codec Rate, the Frame Rate) that are strongly related to the specific type of audio and video based on the service XDR, the predetermined Service Type result can be clarified first if the Service Type (the Table 1) is not specified, and then other fields can be calculated and predicted. The evaluation algorithm related to audio and video is initially evaluated based on the length of the payload of the RTP message, timestamp and other information. Furthermore, in the example of modifying the business XDR for updating, a similar method can also be used to modify the relevant fields by Service Type of in the signaling XDR.

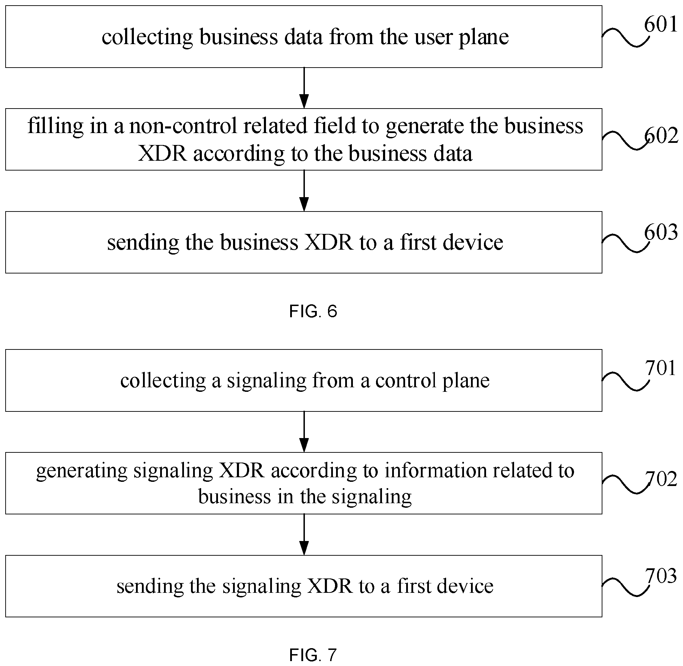

Another aspect of the present application also provides a method for obtaining business XDR, which is applied to the second device. The process is as shown in FIG. 6 and may include at least the following steps.

Step 601, collecting business data from the user plane.

In this embodiment, the business data may be data packets, messages, and the like. The collection of business data can be achieved by a hardware, such as setting up probes.

Step 602, filling in a non-control related field to generate the business XDR according to the business data.

In this embodiment, non-control related fields are fields that can be determined by business data without relying on control plane data.

In some examples, the filling in a non-control related field to generate the business XDR according to the business data can be achieved in the following steps: determining fields that can be determined without relying on the control plane information, extracting information from business data based on the determined fields and generating corresponding fields, and obtaining the business XDR based on the generated fields.

In other embodiments, after the non-control related field is filled to generate the business XDR according to the business data, the fields related to the control plane information are also calculated and predicted based on the business data, and filled in the business XDR to further complete the business XDR..

It should be noted that, in the business XDR, the fields related to the control plane information may be missing, and the field information related to the control plane information may have deviations. When the business XDR is sent by the second device to the first device, the first device can supplement and correct the business XDR based on the received signaling XDR sent by the third device.

The business XDR can be divided into two parts, that is, two XDRs or two sub-XDRs that respectively record uplink business and downlink business, and the like, which will not be repeated here.

Step 603, sending the business XDR to a first device.

Another aspect of the present application also provides a method for obtaining business XDR, which is applied to the third device. The process is as shown in FIG. 7 and may include at least the following steps.

Step 701, collecting a signaling from a control plane.

In this embodiment, the signaling can be collected by a hardware, such as setting up probes.

Step 702, generating signaling XDR according to information related to business in the signaling.

In this embodiment, the expression form of business-related information in signaling will not be limited, nor does the periodicity of the control information recorded by the signaling XDR or the stage in the service will be limited. For example, when the business is the streaming media business, the business can be information related to the media stream in the SDP message body, and a signaling XDR can be the record of multiple SDP message bodies transmitted in multiple media negotiation processes in one session, or can be the record of the SDP message bodies transmitted in one media negotiation process.

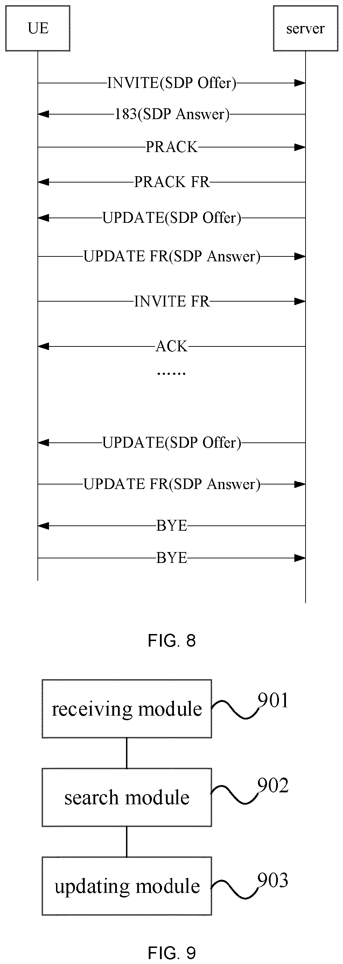

Taking the VoNR as an example, there is currently a description about SIP XDR of the SBC. On this basis, this embodiment also adds the output SDP XDR, that is, a detail record of the SDP negotiation process generated based on the collected control plane SIP signaling. The ordering timing in the call process in SIP XDR is still the final response timing of receiving the initial Invite request, and the session end response timing after receiving. This is the same as the existing mechanism and has not changed. Unlike the SIP XDR, the ordering timing of which only two, an SDP XDR needs to be outputted at the end of each SDP media negotiation, to ensure that the synthesis server can obtain the media negotiation results in time. The SIP call process is generally complex, and FIG. 8 can basically reflect the timing of the SDP XDR from creation to ordering timing. SDP Offer and SDP Answer in FIG. 8 are the offer/answer models of the SDP, and SDP XDR needs to collect media stream related information in the SDP message body. As can be seen from FIG. 8, there will be multiple media negotiations in one SIP session. Even after the session is established, there will be session modifications, that is, new media negotiations will occur. The SDP message body collected during each media negotiation can generate one SDP XDR.

Step 703, sending the signaling XDR to a first device.

It should be noted that the above method embodiments describes the method of obtaining the business XDR from the aspects of the first device, the second device and the third device respectively, which is to facilitate the description of the implementation of different functions, and does not mean that they must be implemented by different devices. For example, the first device and the second device can be integrated into the same physical device. Accordingly, the sending and receiving are actually communication processes within the device, which will not be repeated here.

In order to facilitate those skilled in the art to better understand the method for obtaining the business XDR mentioned in the above embodiments, the signaling XDR will be the SDP XDR, and the business XDR will be the RTP/RTCP XDR for description below. For the convenience of describing the difference between the existing processing procedures and the present application, the SIP XDR is also introduced below.

First, the third device recognizes the call request message through the method=INVITE in the Request-URI of the collected SIP message, applies for the resources required to process the call process, and performs signaling decoding. Then the third device will extract relevant cells from the decoding and fill them in the corresponding interface fields in the collection specification, thereby creating SIP Invite transaction XDR and creating SIP session XDR for SIP calls, and also creating a first SDP XDR_1 for the SDP messages in the SIP Invite message. This SDP XDR needs to be used for subsequent updating of the RTP/RTCP XDR. The information in the SDP XDR also includes required fields and optional fields. The required fields are the keys associated with multiple XDRs, which at least include SIP CaIIID, SessionlD, User_Type, calling and called numbers, source and destination media stream IP addresses. The optional fields are information related to media stream quality extracted from SDP, including source media IP address, destination IP address, number of media streams, media negotiation results, and the like. In this case, since the field is filled when the Invite request message is received, all the media information on the calling side is filled in. In particular, the newly added SDP_XDR interface can refer to the interface definition specification in "China Mobile 5G Internet Log Retention System Technical Specification - Control Plane Collection and Analysis Equipment Interface Specification 2.0. docx", and the design idea is as follows.

**Table 2**

| Field name | Encoding | Type | Length | Default value | Description |
|---|---|---|---|---|---|
| Interface | V | unsigned int | 1 | all F | Interface type, decimal encoding: 13.Gm signaling plane |
| Session ID | V | unsigned int | 8 | all F | Session ID, used to uniquely identify a call of a certain user. |
| | | | | | Requirements: the "Session ID" field of the sliced call detail record (CDR) is the same as that of the session CDR, and the "Session ID" field of the audio CDR is the same as that of the video CDR |
| CALLID | V | string | 64 | all F | IMS session call ID. If the length of the Call ID in the message exceeds 64 characters, it will be truncated and the last 64 characters will be retained |
| User_Type | TLV | unsigned int | 1 | all F | Used to identify the UE on the side of the collection point (namely the source terminal) as the calling party or called party: 1. calling party, 2. called party; for the S1-U and Gm interfaces, the source UE information is all filled in; for the Mb interface, any UE information at one terminal is filled in |
| Source_MSISDN | TLV | unsigned int | 16 | all F | Source terminal user number (TBCD encoding) |
| Dest_MSISDN | TLV | unsigned int | 16 | all F | Opposite terminal user number (TBCD code) |
| Source_Media_ I P | TLV | byte | 16 | all F | Source-side media IP address. IPv4: 4 bytes, the first 12 bytes are filled in with all F; IPv6: 16 bytes. For the Gm interface, the source side is PGW. |
| Dest_Media_IP | TLV | byte | 16 | all F | The destination side media IP address. IPv4: 4 bytes, the first 12 bytes are filled in with all F; IPv6: 16 bytes. For the Gm interface, the destination side is SBC |
| Media_Stream_ Num | TLV | unsigned int | 1 | all F | Number of media streams. Each media stream includes the following fields: Service_Type, Source_Media_PORT, Dest_Media_PORT, Media_Format_Num and several Media Format structures |
| Stream 1 Service_Type | TLV | unsigned int | 1 | all F | Media type used to identify this session: 1. audio, 2. video |
| Stream 1 Source_Media_PORT | TLV | unsigned int | 2 | all F | Source side media port number |
| Stream 1 Dest_MediaPORT | TLV | unsigned int | 2 | all F | Destination side media port number |
| Stream 1 Media_Format_Num | TLV | unsigned int | 1 | all F | Number of agreed upon media formats can be several in total; each media format includes the following fields: Payload_Type, Codec_Type, Resolution_Width, Resolution_Height |
| Stream 1 CT 1 Payload_Type | TLV | unsigned int | 1 | all F | Payload Type |
| Stream 1 CT 1 Codec_Type | TLV | unsigned int | 1 | all F | Encoding method corresponding to the start time of this XDR. For audio sessions, the specific values are as follows: 1. FR-AMR, 2. HR-AMR... |
| | | | | | 254. Unknown |
| Stream 1 CT 1 Resolution_Width | TLV | unsigned int | 2 | all F | Width resolution of the video. For audio, this field is filled with all F |
| Stream 1 CT 1 Resolution_Height | TLV | unsigned int | 2 | all F | Height resolution of the video. For audio, the field is filled with all F |
| ... ... | TLV | ... ... | ... ... | ... ... | ... ... |
| Stream 1 CT N Payload_Type | TLV | unsigned int | 1 | all F | Payload Type |
| Stream 1 CT N Codec_Type | TLV | unsigned int | 1 | all F | Encoding method corresponding to the start time of this XDR |
| Stream 1 CT N Resolution_Width | TLV | unsigned int | 2 | all F | Width resolution of the video. For audio, this field is filled with all F |
| Stream 1 CT N Resolution_Height | TLV | unsigned int | 2 | all F | Height resolution of the video. For audio, the field is filled with all F |
| ... ... | ... ... | ... ... | ... ... | ... ... | ... ... |
| Stream M Service_Type | TLV | unsigned int | 1 | all F | Media type used to identify this session: 1. audio, 2. video |
| Stream M Source_Media_PORT | TLV | unsigned int | 2 | all F | Source side media port number |
| Stream M Dest_Media_PORT | TLV | unsigned int | 2 | all F | Destination side media port number |
| Stream M Media_Format_Num | TLV | unsigned int | 1 | all F | Number of agreed upon media formats can be several in total; each media format includes the following fields: Payload_Type, Codec_Type, Resolution_Width, Resolution_Height |
| Stream M CT 1 Payload_Type | TLV | unsigned int | 1 | all F | Payload Type |
| Stream M CT 1 Codec_Type | TLV | unsigned int | 1 | all F | Encoding method corresponding to the start time of this XDR |
| Stream M CT 1 Resolution_Width | TLV | unsigned int | 2 | all F | Width resolution of the video. For audio, this field is filled with all F |
| Stream M CT 1 Resolution_Height | TLV | unsigned int | 2 | all F | Height resolution of the video. For audio, the field is filled with all F |
| ... ... | TLV | ... ... | ... ... | ... ... | ... ... |
| Stream M CT N Payload_Type | TLV | unsigned int | 1 | all F | Payload Type |
| Stream M CT N Codec_Type | TLV | unsigned int | 1 | all F | Encoding method corresponding to the start time of this XDR |
| Stream M CT N Resolution_Width | TLV | unsigned int | 2 | all F | Width resolution of the video. For audio, this field is filled with all F |
| Stream M CT N Resolution_Height | TLV | unsigned int | 2 | all F | Height resolution of the video. For audio, the field is filled with all F |

Of course, other methods can be referred to or the business XDR can be formed by independent design. The above table is only a specific example.

Then, the third device collects SIP 183 and other non-failure response messages that are not located between 100 and 3XX-6XX. In this case, SIP related information is first extracted, the called side information in the SIP transaction XDR is filled in, and the called side information in the SIP session XDR is filled in. If the message also carries SDP, the SDP information is parsed to fill in the information carried by the called side in SDP XDR_1 , and part of the control plane information in the SIP session is filled in the SIP related fields in SDP XDR_1. After the processing is completed, the SIP transaction XDR and SDP XDR issue the order and send it to the first device from the IF1 interface. During the SIP session, if the media negotiation is not completed, according to the SIP protocol, the two parties will continue the media negotiation through subsequent messages in the conversation until the negotiation is successful. If the first negotiation fails and an Update message initiated by the calling party is received again, the third device will create a new SDP XDR_2, parse the SDP message, and fill in the calling side information in SDP XDR_2. It can be understood that a negotiation request must have a response, after receiving a negotiation response, such as 200OK (Update), the third device parses the SDP message and fills in the called side information in SDP XDR_2. Then the relevant information in the SIP session is filled into the SIP signaling-related fields in SDP XDR_2. After the SDP XDR field is processed, it is immediately sent out through IF1. When media negotiation is performed multiple times in this way, SDP XDR is outputted as described above each time. Media updates may also be initiated during the time from the establishment of the session to the termination of the session. For example, due to network, the audio and video communication is adjusted to audio-only communication. In this case, the SDP XDR is also processed in the same manner as mentioned above, and SDP XDR is outputted. Until the third device receives the Bye message, the call is terminated, or the internal session keep-alive timer times out, the call duration and termination information fields are filled in to the SIP session XDR.

It should be noted that the SIP-related fields in the SDP XDR do not have to be filled in the order of processing the SDP first and then processing the SIP as mentioned above. Instead, they should be filled in when the SDP XDR is created. The session ID, CaIIID, calling and called numbers and other information in SDP XDR can be managed together with the SIP session XDR, or can be extracted when the SDP XDR is outputted.

As for the second device generating RTP/RTCP XDR, the main principle is to try to fill in accurate and uncontroversial field information, such as slicing direction, slicing start time, slicing end time, number of packets received, number of packets lost, link information, and the like. The fields determined by the relevant information carried by the control plane will not be processed temporarily.

When the media sub-module that processes user plane media data processes VoLTE/VoNR media XDR after SBC adopts CU separation deployment, the audio and video type bServerType field can be filled in advance. The pre-judgment rule is: when the timestamps of two consecutive RTP messages are the same, it is determined that the bServerType field indicates video; when the timestamps of two consecutive RTP messages are different and the payload length is less than 500 bytes, it is determined that the bServerType field indicates audio; when the timestamp of the packets are different, and the payload length is greater than 500 bytes, it is determined that the bServerType field indicates the video; and when the bServiceType is not recognized, only the number of packets received, the number of lost packets, and the like are counted, and jitter-related parameters and encoding rate-related parameters are not calculated.

When the first device receives SDP_XDR_1 sent by the third device, the first device needs to cache all the information in SDP Info. If the first device subsequently receives SDP_XDR_n in the same SIP session, it means that the media negotiation has changed, and the received new SDP_XDR needs to delete the media stream information that is no longer used and add new media stream information, that is, the cached information needs to be refreshed immediately. When the RTP/RTCP XDR sent by the second device is received, if the RTP/RTCP XDR is missing, the cached media stream information will be searched through the associated information. If the cached media stream information cannot be found, the sliced call detail record will be cached for 5 seconds. The specific time can be set. After the timeout, backfilling will be tried again. If the associated media stream information can be found, then association backfilling will be performed. Specifically, associate and backfill static information, such as Session_ID, calling and called numbers, Stream 1 Service_Type, Resolution_Width, Resolution_Height, and the like. If RTP/RTCP XDR is inconsistent with the SDP XDR association field, ServerType in SDP _Info will be updated to the slice XDR, the RTP delay, jitter and other fields in the slice XDR are calculated and filled in based on the new values. If the media protocol machine calculates the RTP delay, jitter and other related fields in the preliminary prediction based on the pre-judgment results, and if inconsistencies are found, the original calculations need to be corrected. Whether the RTP/RTCP XDR is inconsistent with the SDP XDR associated field is determined by finding the associated SDP _Info information, and the value of the ServerType field can be obtained. Then whether the ServerType in the SDP XDR is consistent with that in the slice can be compared.

The correction of fields in RTP/RTCP XDR under C/U separation is also suitable for CU integration scenarios. The newly added SDP XDR will also record the intermediate negotiations, which will make the data outputted by RTP/RTCP XDR of CU integration more accurate.

In addition, it should be understood that the division of steps in the various methods above is only for the purpose of clear description. During implementation, they can be combined into one step or some steps can be divided into multiple steps. As long as they include the same logical relationship, they shall all fall within the scope of the present application. Adding insignificant modifications or introducing insignificant designs to the algorithm or process, but not changing the core design of the algorithm and process shall all fall within the protection scope of the present application.

Another aspect of embodiments of the present application further provides a device, as shown in FIG. 9, which includes:
a receiving module 901 configured to receive business XDR sent by a second device, where the business XDR is generated based on business data collected from a user plane;
a search module 902 configured to search target signaling XDR in signaling XDR sent by a third device according to the business XDR and a preset association between business and signaling, where the signaling XDR is generated based on information related to business in a signaling collected from the control plane; and
an updating module 903 configured to update the business XDR according to the target signaling XDR.

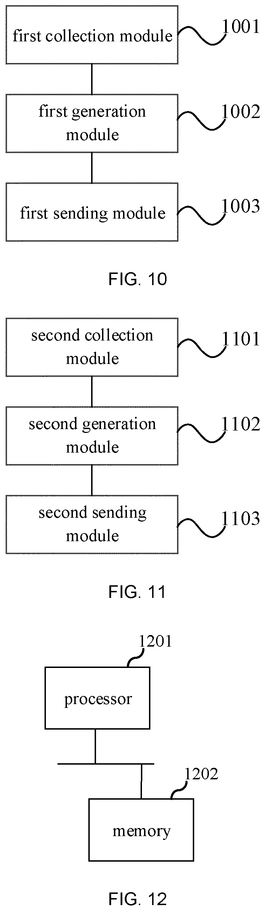

Another aspect of embodiments of the present application further provides a device, as shown in FIG. 10, which includes:
a first collection module 1001 configured to collect business data from a user plane;
a first generation module 1002 configured to fill in a non-control related field according to the business data to generate the business XDR; and
a first sending module 1003 configured to send the business XDR to a first device.

Another aspect of embodiments of the present application further provides a device, as shown in FIG. 11, which includes:
a second collection module 1101 configured to collect signaling from a control plane;
a second generation module 1102 configured to generate signaling XDR according to information related to business in the signaling; and
a second sending module 1103 configured to send the signaling XDR to a first device.

It is not difficult to find that the above device embodiments correspond to the method embodiments, and the above device embodiments and method embodiments can be implemented in cooperation with each other. The relevant technical details mentioned in the method embodiment are still valid in the above-mentioned device embodiment. In order to reduce duplication, they will not be repeated here. Correspondingly, the relevant technical details mentioned in the above device embodiments can also be applied to the method embodiments.

It is worth mentioning that each module involved in this embodiment is a logical module. In practical applications, a logical unit can be a physical unit, or a part of a physical unit, or it can be combination of multiple physical units. In addition, in order to highlight the innovative part of the present application, units that are not closely related to the technical problems in the present application are not introduced in this embodiment, but this does not mean that other units do not exist in this embodiment.

Another aspect of embodiments of the present application further provides an electronic device, as shown in FIG. 12, which includes at least one processor 1201 and a memory 1202 communicating with the at least one processor 1201. The memory 1202 stores an instruction executable by the at least one processor 1201, and when the instruction is executed by the at least one processor 1201, the at least one processor 1201 implements a method for obtaining business XDR described in any of the above method embodiments.

The memory 1202 and the processor 1201 are connected by using a bus. The bus can include any number of interconnected buses and bridges. The bus connects one or more processors 1201 and various circuits of the memory1202 together. The bus may also connect various other circuits, such as peripherals, voltage regulators, and power management circuits, which are all well known in the art and therefore will not be repeated herein. The bus interface provides the interface between the bus and the transceiver. A transceiver may be one element or may be multiple elements, such as multiple receivers and transmitters, providing units used for communicating with various other devices over a transmission medium. The data processed by the processor 1201 is transmitted over the wireless medium through the antenna. Further, the antenna also receives the data and transmits the data to the processor 1201.

The processor 1201 is used for managing the bus and general processing, and can also provide a variety of functions, including timing, providing peripheral interfaces, voltage regulation, power management, and other control functions. The memory 1202 can be configured to store data used by the processor when the processor 1201 performs operations.

Another embodiment of the present application relates to a computer-readable storage medium storing a computer program. The method for obtaining business XDR described in any of the above method embodiments is implemented when the computer program is executed by the processor.

That is, those skilled in the art can understand that all or part of the steps in the methods of the above embodiments can be completed by instructing relevant hardware through a program. The program is stored in a storage medium and includes several instructions to cause a device (which may be a microcontroller, a chip, and the like) or a processor to execute all or part of the steps of the methods described in various embodiments of the present application. The aforementioned storage media include mediums which can store program code, such as a U disk, a mobile hard disk, a read-only memory (ROM), a random access memory (RAM), a magnetic disk or an optical disk, and the like.

Those skilled in the art can understand that the above-mentioned embodiments are some embodiments for implementing the present application, and during actual applications, various modifications can be made in form and details without departing from the spirit and the scope of the present application.

## Claims

1. A method for obtaining business x detail record (XDR), applied to a first device, **characterized by** comprising:
(401), receiving business XDR sent by a second device, wherein the business XDR is generated based on business data collected from a user plane;
(402), searching target signaling XDR in signaling XDR sent by a third device according to the business XDR and a preset association between business and signaling, wherein the signaling XDR is generated based on information related to business in a signaling collected from a control plane; and
(403), updating the business XDR according to the target signaling XDR.

2. The method for obtaining the business XDR according to claim 1, wherein the (403), updating the business XDR according to the target signaling XDR comprises:
determining a missing field in the business XDR;
searching information related to the missing field from the target signaling XDR, and generating a fill field based on found information; and
filling the fill field into the business XDR.

3. The method for obtaining the business XDR according to claim 1, wherein the (403), updating the business XDR according to the target signaling XDR comprises:
modifying a corresponding association field in the business XDR according to an association field in the signaling XDR when it is detected that an association field of the target signaling XDR is inconsistent with an association field of the business XDR, wherein the association field is a field describing a same object in the signaling XDR and the business XDR.

4. The method for obtaining the business XDR according to any one of claims 1 to 3, wherein before the (402), searching the target signaling XDR in the signaling XDR sent by the third device according to the business XDR and the preset association between the business and the signaling, the method further comprises:
receiving the signaling XDR sent by the third device; and
caching received signaling XDR in a local cache,
the searching the target signaling XDR in the signaling XDR sent by the third device according to the business XDR and the preset association between the business and the signaling comprises:
searching the target signaling XDR in the local cache according to the business XDR and the preset association between the business and the signaling.

5. The method for obtaining the business XDR according to any one of claims 1 to 3, wherein when it is detected that business corresponding to the business XDR ends, the updating the business XDR according to the target signaling XDR comprises:
updating the business XDR according to the target signaling XDR and adding information indicating that the business ends to an updated business XDR, and
after the updating the business XDR according to the target signaling XDR, the method further comprises:
releasing a signaling XDR resource configured to maintain the business XDR.

6. A method for obtaining business XDR, applied to a second device, **characterized by** comprising:
(601), collecting business data from a user plane;
(602), filling in a non-control related field to generate the business XDR according to the business data; and
(603), sending the business XDR to a first device.

7. A method for obtaining business XDR, applied to a third device, **characterized by** comprising:
(701), collecting a signaling from a control plane;
(702), generating signaling XDR according to information related to business in the signaling; and
(703), sending the signaling XDR to a first device.

8. A device, **characterized by** comprising:
a receiving module (901) configured to receive business XDR sent by a second device, wherein the business XDR is generated based on business data collected from a user plane;
a search module (902) configured to search target signaling XDR in signaling XDR sent by a third device according to the business XDR and a preset association between business and signaling, wherein the signaling XDR is generated based on information related to business in a signaling collected from a control plane; and
an updating module (903) configured to update the business XDR according to the target signaling XDR.

9. A device, **characterized by** comprising:
a first collection module (1001) configured to collect business data from a user plane;
a first generation module (1002) configured to fill in a non-control related field according to the business data to generate business XDR; and
a first sending module (1003) configured to send the business XDR to a first device.

10. A device, **characterized by** comprising:
a second collection module (1101) configured to collect signaling from a control plane;
a second generation module (1102) configured to generate signaling XDR according to information related to business in the signaling; and
a second sending module (1103) configured to send the signaling XDR to a first device.

11. An electronic device, **characterized by** comprising:
at least one processor (1201); and
a memory (1202) communicating with the at least one processor (1201),
wherein the memory (1202) stores an instruction executable by the at least one processor (1201), and when the instruction is executed by the at least one processor (1201), the at least one processor (1201) implements the method for obtaining business XDR according to any one of claims 1 to 5, or the at least one processor (1201) implements the method for obtaining business XDR according to claim 6, or the at least one processor (1201) implements the method for obtaining business XDR according to claim 7.

12. A computer-readable storage medium storing a computer program, **characterized in that** when the computer program is executed by a processor, the method for obtaining business XDR according to any one of claims 1 to 5 is implemented, or the method for obtaining business XDR according to claim 6 is implemented, or the method for obtaining business XDR according to claim 7 is implemented.
